# EUROPÄISCHE PATENTSCHRIFT

(11) **EP 3 416 799 B1**
(45) Veröffentlichungstag und Bekanntmachung des Hinweises auf die Patenterteilung: **06.05.2020**
(21) Anmeldenummer: 17701837.1
(22) Anmeldetag: 23.01.2017
(51) Int. Cl.: B29C 45/00, B29C 70/38

(54) **VERFAHREN ZUR HERSTELLUNG EINES GEFORMTEN STABES AUS FASERVERBUNDMATERIAL**
METHOD FOR PRODUCING A SHAPED BAR FROM FIBRE COMPOSITE MATERIAL
PROCÉDÉ DE FABRICATION D'UNE BARRE MOULÉE À PARTIR D'UN MATÉRIAU COMPOSITE RENFORCÉ PAR DES FIBRES

(30) Priorität: 17.02.2016 DE 102016202429
(43) Veröffentlichungstag der Anmeldung: 26.12.2018
(73) Patentinhaber: Bayerische Motoren Werke Aktiengesellschaft, 80809 München (DE)
(72) Erfinder: HOGGER, Thomas, 83624 Otterfing (DE); KONRAD, Oleg, 84030 Ergolding (DE)
(86) Internationale Anmeldenummer: PCT/EP2017/051297
(87) Internationale Veröffentlichungsnummer: WO 2017/140460

(56) Entgegenhaltungen:
- DE-A1-102010 044 175
- CAMPBELL F C ED - CAMPBELL FLAKE C: "Manufacturing processes for advanced composites, Chapter 10 (Thermoplastic Composites: An Unfulfilled Promise)", 1. Januar 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2 Site 377 Fig.16, "Heat energy"
- C Flake Campbell: "Manufacturing Processes for Advanced Composites" In: "Manufacturing Processes for Advanced Composites", 30. Dezember 2004 (2004-12-30), XP055360300, Seiten 144-148, Seite 144,147
- Bürkle . Wobbe ET AL: "Bürkle Wobbe Kombinationstechnologien auf Basis des Spritzgießverfahrens -orderid -21852193 -transid -21852193_1D", , 1. Januar 2016 (2016-01-01), XP055360392, Gefunden im Internet: URL:- [gefunden am 2017-03-30]

## Beschreibung

Die Erfindung betrifft ein Verfahren zur Herstellung eines geformten Stabes aus Faserverbundmaterial, vorzugsweise unter Verwendung eines Industrieroboters.

Faserverstärkte Kunststoffe besitzen ein hohes Leichtbaupotenzial und können im Vergleich zu anderen Werkstoffen, wie beispielsweise Metallen oder unverstärkten Kunststoffen, durch die eingearbeiteten Fasern hohe Zugkräfte aufnehmen. Dabei sind die gewichtsspezifischen Vorteile von faserverstärkten Kunststoffen am besten nutzbar, wenn die Fasern im Matrixmaterial lastpfadgerecht ausgelegt sind, was eine belastungsgerechte Konstruktion des Werkstoffs voraussetzt. Im Automobilbau ist dies bis heute jedoch nur ansatzweise realisiert.

Aus dem Stand der Technik ist bekannt, gerade Stäbe aus Faserverbundmaterial beispielsweise mittels thermoplastischer Pultrusion herzustellen. Das Verfahren ist jedoch nur schwierig zu beherrschen. Zudem sind die Anlagen sehr groß, teuer und unflexibel bezüglich der fertigbaren Bauteilsformen.

Weitere Verfahren zur Verarbeitung von Faserverbundmaterialien sind aus dem Buch "Manufacturing Processes for Advanced Composites" von F. C. Campbell, ISBN: 978-1-85617-415-2 und der Offenbarung der DE 10 2010 044 175 A1 bekannt. Verschiedene Verfahren im Bereich der Spritzgießtechnik sind in dem Buch "Kombinationstechnologien auf Basis des Spritzgießverfahrens" von Bürkle, Wobbe ET AL, ISBN: 978-3-446-44300-6 offenbart.

Der Erfindung liegt deshalb die Aufgabe zugrunde, ein Verfahren bereit zu stellen, mit dem Stäbe aus Faserverbundmaterial kostengünstiger und mit größerer Variabilität hinsichtlich der Formgebung herstellbar sind.

Diese Aufgabe wird durch die Merkmalskombination gemäß Patentanspruch 1 gelöst.

Erfindungsgemäß wird ein Verfahren zur Herstellung eines geformten Stabes aus Faserverbundmaterial unter Verwendung eines Verbindungswerkzeugs vorgeschlagen. Das Verfahren umfasst zumindest die Schritte, dass dem Verbindungswerkzeug parallel mehrere mit einer thermoplastischen Matrix versehene Fasertapes zugeführt werden, die zusammengeführt und in einem Aufheizabschnitt des Verbindungswerkzeugs zu einer Faserschnur erwärmt und verbunden werden, wobei die Faserschnur anschließend von dem Verbindungswerkzeug unmittelbar und ohne Abzukühlen in ein Verarbeitungswerkzeug oder eine Ablagevorrichtung, die ausgebildet ist, die Faserschnur in das Verarbeitungswerkzeug einzulegen, abgelegt wird. Das Verbindungswerkzeug wird durch einen mehrachsigen Industrieroboter gebildet oder von diesem getragen und wird während des Ablegens der Faserschnur bewegt. Es werden mehrere Faserschnüre in ihrer jeweiligen Endform in das Spritzgusswerkzeug abgelegt, wobei die mehreren Faserschnüre zusammen eine Bauteilstruktur eines zu fertigenden Bauteils bilden und unmittelbar mit Kunststoff umspritzt werden.

Der Mehrachsenroboter ist vorzugsweise mit einem Roboterkopf ausrüstbar. In den Roboterkopf sind die zur Durchführung des Verfahrens nötigen Maschinenabschnitte integrierbar, wobei diesbezüglich insbesondere ein Vortrieb zur Zuführung und Förderung der die thermoplastische Matrix aufweisenden Fasertapes, eine Einrichtung zum Zusammenführen und Bündelung der Fasertapes, eine Heizstrecke zur Erwärmung der zusammengeführten Fasertapes im Aufheizabschnitt und ein Austrieb zur Ablage der erzeugten Faserschnur enthalten sind. Sowohl der Vortrieb als auch die Einrichtung zum Zusammenführen und Bündelung der Fasertapes können über zusammenwirkende Rollen oder Walzen bereitgestellt sein. Die getränkten Fasertapes werden dem Industrieroboter als Ausgangsmaterial auf Rollen oder Spulen aufgewickelt bereitgestellt.

Durch Verwendung eines mehrachsigen Industrieroboters können die Faserschnüre in beliebigen Formen und an beliebige Positionen abgelegt werden. Auch ist ermöglicht, die Anzahl der Fasertapes und der Faserschnüre und mithin die Verstärkungscharakteristik variabel einzustellen. Vorzugsweise werden mehrere Fasertapes parallel zugeführt.

In einer günstigen Ausführungsvariante sind die Fasertapes aus Kohlenstoffasern gebildet. Sie weisen eine Dicke von 0,1 - 0,3mm auf. Vorzugsweise sind die Fasertapes unidirektional ausgebildet.

Ferner ist bei dem erfindungsgemäßen Verfahren realisierbar, dass durch den Industrieroboter nacheinander mehrere Faserschnüre aufeinander abgelegt werden. Über die Anzahl der Faserschnüre ist die Materialstärke des zu erzeugenden Stabes steuerbar. Der Industrieroboter ist dabei programmierbar, mehrere identische Faserschnüre entlang der vorbestimmten Erstreckung aufeinander abzulegen, um die Stabdicke einzustellen. Die Faserschnüre verbinden sich bzw. haften aneinander über ihre jeweilige thermoplastische Matrix.

Zudem ist als weitere alternative Ausführung des Verfahrens vorteilhaft, dass die Anzahl der zugeführten Fasertapes variabel ist. Über die Anzahl der Fasertapes ist der Querschnitt der jeweiligen Faserschnur festlegbar.

Gemäß einem ersten Aspekt der vorliegenden Erfindung ist vorgesehen, dass das Verarbeitungswerkzeug ein Umformwerkzeug ist. Die Faserschnüre können dann in einer beliebigen Form und mit hoher Geschwindigkeit in das Umformwerkzeug abgelegt werden, wobei die Faserschnüre anschließend durch das Umformwerkzeug in ihre gewünschte Endform gebracht werden. Diese Variante ist auch für die dreidimensionale Formgebung der zu erzeugenden Stäbe einsetzbar. Anschließend an die Umformung wird die umgeformte Faserschnur bzw. der Stapel an Faserschnüren mit Kunststoff umspritzt. Alternativ hierzu kann die vom Verbindungswerkzeug bereitgestellte Faserschnur in eine Ablagevorrichtung abgelegt werden, wobei die Ablagevorrichtung anschließend in das Umformwerkzeug zur Umformung der Faserschnur in seine Endform einlegbar ist. Bei der Verwendung einer Ablagevorrichtung, die beispielsweise durch eine Aluminiumform gebildet wird, kann eine gekrümmte Formgebung der Faserschnur durch eine Bewegung der Ablagevorrichtung im Raum erfolgen, wobei die Faserschnur im Wesentlichen gerade aus dem Verbindungswerkzeug ausläuft. Die Bewegung im Raum ist durch einen Roboter realisierbar, da die Ablagevorrichtung im Gegensatz zum Umformwerkzeug sehr leicht ist.

Die erfindungsgemäß geformten Stäbe dienen in der Fahrzeugtechnik unter anderem als Trägermaterial zur Stabilisierung von Kunststoffbauteilen, beispielsweise bei einem Dachspriegel.

Gemäß einem zweiten Aspekt der vorliegenden Erfindung ist vorgesehen, dass das Verarbeitungswerkzeug ein Spritzgusswerkzeug ist und die Faserschnur bzw. die Faserschnüre unmittelbar in das Spritzgusswerkzeug bzw. in deren Form abgelegt werden.

Durch den Einsatz des Industrieroboters wird erfindungsgemäß ermöglicht, dass die Faserschnur gekrümmt, insbesondere auch dreidimensional gekrümmt abgelegt wird. Die dadurch erzeugbaren Bauteile weisen gegenüber dem herkömmlichen Pultrusionsverfahren eine vergrößerte Variabilität in der Formgebung und mithin einen vergrößerten Einsatzbereich auf.

In einer vorteilhaften Ausführungsvariante des Verfahrens wird vorgesehen, dass die Faserschnur in einer Endform des zu fertigenden geformten Stabes in das Spritzgusswerkzeug abgelegt und unmittelbar mit Kunststoff umspritzt wird. Der Industrieroboter arbeitet dabei unmittelbar in die Spritzgussmaschine und legt die Faserschnüre in die vorgegebene Form innerhalb der Spritzgussmaschine. Sobald die Ablage der Faserschnur beendet ist, können das Spritzgusswerkzeug geschlossen und Kunststoff um die den Stab bzw. die Stäbe eingespritzt werden. Die Wartezeiten und Werkzeugstandzeiten sind sehr gering. Die Herstellungsgeschwindigkeit wird erheblich gesteigert und die Kosten gesenkt.

Ferner ist eine Ausführung des Verfahrens günstig, bei dem die Faserschnüre in einer Gitterstruktur abgelegt werden. Die Gitterstruktur kann anschließend im Kunststoffspritzgussverfahren umspritzt werden. Beim Einsatz einer Gitterstruktur sind mehrere Lastpfade im Bauteil variabel gestaltbar.

Andere vorteilhafte Weiterbildungen der Erfindung sind in den Unteransprüchen gekennzeichnet. Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise sind auch andere Fasermaterialien als Kohlenstofffasern verarbeitbar. Als thermoplastische Matrix kann beispielsweise eine Polyamidmatrix verwendet werden.

## Patentansprüche

1. Verfahren zur Herstellung eines geformten Stabes aus Faserverbundmaterial unter Verwendung eines Verbindungswerkzeugs, das einen Aufheizabschnitt aufweist, zumindest umfassend die Schritte, dass dem Verbindungswerkzeug parallel mehrere mit einer thermoplastischen Matrix versehene Fasertapes zugeführt werden, die zusammengeführt und im Aufheizabschnitt zu einer Faserschnur erwärmt und verbunden werden, wobei die Faserschnur anschließend und ohne Abzukühlen von dem Verbindungswerkzeug unmittelbar in ein Verarbeitungswerkzeug oder eine Ablagevorrichtung, die ausgebildet ist, die Faserschnur in das Verarbeitungswerkzeug einzulegen, abgelegt wird, **dadurch gekennzeichnet, dass** das Verbindungswerkzeug durch einen mehrachsigen Industrieroboter gebildet oder von diesem getragen wird und während des Ablegens der Faserschnur bewegt wird, und dass mehrere Faserschnüre in ihrer jeweiligen Endform in das Spritzgusswerkzeug abgelegt werden, wobei die mehreren Faserschnüre zusammen eine Bauteilstruktur eines zu fertigenden Bauteils bilden und unmittelbar mit Kunststoff umspritzt werden.

2. Verfahren nach Anspruch 1, **dadurch gekennzeichnet, dass** die Anzahl der zugeführten Fasertapes variabel ist und den Querschnitt der Faserschnur bestimmt.

3. Verfahren nach zumindest einem der vorigen Ansprüche, **dadurch gekennzeichnet, dass** das Verarbeitungswerkzeug ein Umformwerkzeug ist.

4. Verfahren nach zumindest einem der vorigen Ansprüche 1 oder 2, **dadurch gekennzeichnet, dass** das Verarbeitungswerkzeug ein Spritzgusswerkzeug ist.

5. Verfahren nach zumindest einem der vorigen Ansprüche, **dadurch gekennzeichnet, dass** die Faserschnur gekrümmt abgelegt wird.

6. Verfahren nach Anspruch 4 oder 5, **dadurch gekennzeichnet, dass** die Faserschnur in einer Endform des zu fertigenden geformten Stabes in das Spritzgusswerkzeug abgelegt und unmittelbar mit Kunststoff umspritzt wird.

7. Verfahren nach Anspruch 3, **dadurch gekennzeichnet, dass** die Faserschnur im Umformwerkzeug umgeformt und anschließend mit Kunststoff umspritzt wird.

8. Verfahren nach zumindest einem der vorigen Ansprüche, **dadurch gekennzeichnet, dass** die Faserschnüre in einer Gitterstruktur abgelegt werden.

## Claims

1. A method for producing a shaped rod made of fibre composite material using a joining tool which has a heating portion, at least comprising the steps that a plurality of fibre tapes provided with a thermoplastic matrix are supplied in parallel to the joining tool, which tapes are brought together and are heated and joined to form a fibre cord in the heating portion, wherein the fibre cord subsequently and without cooling is deposited by the joining tool directly in a processing tool or a deposition device which is designed to deposit the fibre cord in the processing tool, **characterised in that** the joining tool is formed by or is borne by a multi-axis industrial robot and is moved during the depositing of the fibre cord, and **in that** a plurality of fibre cords are deposited in the injection mould in their respective final form, wherein the plurality of fibre cords together form a component structure of a component which is to be manufactured and are directly extrusion-coated with plastics material.

2. A method according to Claim 1, **characterised in that** the number of fibre tapes supplied is variable and determines the cross-section of the fibre cord.

3. A method according to at least one of the preceding claims, **characterised in that** the processing tool is a forming tool.

4. A method according to at least one of the preceding Claims 1 or 2, **characterised in that** the processing tool is an injection mould.

5. A method according to at least one of the preceding claims, **characterised in that** the fibre cord is deposited in curved form.

6. A method according to Claim 4 or Claim 5, **characterised in that** the fibre cord in a final form of the shaped rod which is to be manufactured is deposited in the injection mould and is extrusion-coated directly with plastics material.

7. A method according to Claim 3, **characterised in that** the fibre cord is formed in the forming tool and then extrusion-coated with plastics material.

8. A method according to at least one of the preceding claims, **characterised in that** the fibre cords are deposited in a lattice structure.

## Revendications

1. Procédé de fabrication d'une barre moulée en un matériau composite renforcé par des fibres en utilisant un outil d'assemblage qui comporte un segment de chauffage, comprenant au moins des étapes selon lesquelles on fournit parallèlement à l'outil d'assemblage, plusieurs rubans de fibres comportant une matrice thermoplastique qui sont réunies et sont chauffés et liés dans le segment de chauffage pour obtenir un cordon de fibres, le cordon de fibres étant ensuite et sans refroidissement déposé directement par l'outil d'assemblage dans un outil de traitement ou un dispositif de stockage qui est réalisé pour permettre d'introduire le cordon de fibres dans l'outil de traitement,
**caractérisé en ce que**
l'outil d'assemblage est formé par un robot industriel multiaxes ou porté par un tel robot, et est déplacé pendant le dépôt du cordon de fibres, et, **en ce que** plusieurs cordons de fibres sont déposés dans leur forme finale respective dans l'outil de moulage par injection, les cordons de fibres formant conjointement la structure d'un composant à fabriquer et étant directement surmoulés avec du matériau synthétique.

2. Procédé conforme à la revendication 1,
**caractérisé en ce que**
le nombre de rubans de fibres fournis est variable et adapté à la section du cordon de fibres.

3. Procédé conforme à au moins une des revendications précédentes,
**caractérisé en ce que**
l'outil de traitement est un outil de mise en forme.

4. Procédé conforme à au moins l'une des revendications 1 et 2,
**caractérisé en ce que**
l'outil de traitement est un outil d'injection.

5. Procédé conforme au moins l'une des revendications précédentes,
**caractérisé en ce que**
le cordon de fibres est déposé en étant courbé.

6. Procédé conforme à la revendication 4 ou 5,
**caractérisé en ce que**
le cordon de fibres est déposé dans l'outil de moulage par injection dans la forme finale de la barre moulée à fabriquer, et est immédiatement surmoulé avec du matériau synthétique par injection.

7. Procédé conforme à la revendication 3,
**caractérisé en ce que**
le cordon de fibres est mis en forme dans l'outil de mise en forme puis surmoulé avec du matériau synthétique.

8. Procédé conforme à au moins l'une des revendications précédentes,
**caractérisé en ce que**
les cordons de fibres sont déposés selon une structure de réseau.
